# EUROPEAN PATENT SPECIFICATION

(11) **EP 0 467 123 B1**
(45) Date of publication and mention of the grant of the patent: **23.07.1997**
(21) Application number: 91110626.8
(22) Date of filing: 27.06.1991
(51) Int. Cl.: B32B 15/02, A47C 27/16

(54) **A layered support structure for seats, particularly for the squabs of motorvehicle seats, and a method for its manufacture**
Mehrschichtstruktur als Sitzauflage, besonders für die Kissen von Fahrzeugsitzen, sowie Verfahren zu deren Herstellung
Structure multicouche pour sièges, particulièrement pour les assises de sièges de véhicules à moteurs et sa méthode de fabrication

(30) Priority: 03.07.1990 IT 6748790
(43) Date of publication of application: 22.01.1992
(73) Proprietor: FIAT AUTO S.p.A., 10135 Torino (IT)
(72) Inventor: Dal Monte, Antonio, I-00196 Roma (IT)
(74) Representative: Serra, Francesco

(56) References cited:
- DE-A- 2 951 266

## Description

The present invention relates to support structures for seats and has been developed with particular attention to its possible use for motor-vehicle seat squabs.

It has already been proposed (see, for example, European patent application No. EP-A-O 363 330, in the name of the same Applicant) to produce layered support structures (squabs, backrests) for seats, in which at least one of the layers is made of a material having plasticity.

The use of such a layer gives rise to considerable advantages, particularly in relation to the fact that very thin squabs or backrests can be produced which nevertheless have excellent qualities as regards comfort and the bodily restraint of the occupant of the seat.

In particular, in the manufacture of the structure according to the prior European application cited above, the use of the synthetic material sold under the trade name of "Etafoam" was considered preferable for the intermediate plastic layer.

Whilst it is completely satisfactory from a functional point of view, the use of the material specified above involves quite significant costs.

It is known from DE-A-2 951 266 a layered support structure including at least one layer reinforced by a wire mesh.

Moreover, there is a need to find solutions for the production of the plastic layer which do not create particular problems in relation to its inclusion in the structure of the seat, and in particular as regards the connection of the mass of padding (upholstery) to the framework of the seat.

The object of the present invention is to provide the best possible response to the two requirements stated above.

According to the present invention, this object is achieved by virtue of a support structure for seats having the specific characteristics claimed in the claims which follow.

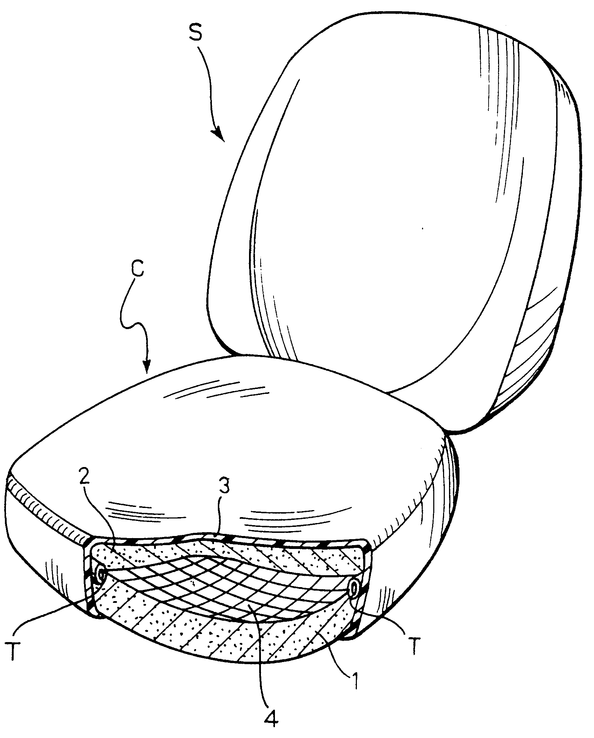

The invention will now be described, purely by way of non-limiting example, with reference to the appended drawing which is a perspective view of a support structure formed according to the invention (with some parts cut away and removed for clarity of representation).

In the drawing, the seat part (in short, the "squab") of a motor-vehicle seat S is generally indicated C.

In this connection, although the following description refers explicitly to a squab, the invention is also intended for application to other support structures, for example, backrests, headrests, etc.

The squab C, is intended to be mounted on a support structure (framework) on the floor of the passenger compartment of the motor vehicle (not visible in the drawing) and has a generally layered structure. This layered structure can be seen to have:
- a lower layer 1 facing the floor of the passenger compartment,
- an upper layer 2 which is intended to face upwardly and is covered - for aesthetic and functional reasons - by a covering layer 3 of fabric, artificial leather, leather or the like, and
- an intermediate layer 4.

For a full description of the physical characteristics (rigidity, etc.) of the layers 1 and 2 - which are made of foamed material - reference should be made to the text of the aforementioned European patent application No. EP-A-O 363 330. In this connection, it should be noted that the squab produced according to the invention may even include a different number of layers if required.

The intermediate layer 4 is intended to provide the squab C as a whole with a certain plasticity, that is, an ability to demonstrate a certain plastic memory in relation to the deformations to which the squab is subject in use under the weight of the occupant of the seat.

Reference may also usefully be made to the text of the prior European patent application already cited several times for a full description of the general physical characteristics of the intermediate layer 4 and the advantages afforded thereby.

The main characteristic of the solution according to the invention is the fact that the intermediate layer 4 is constituted by a steel mesh, such as a wire mesh, for example, with a mesh size of the order of 10 x 10 mm, which may be protected by galvanising (for example, sponged) or by a plastics coating.

In particular, the wires constituting the mesh have similar diameters of the order of 1 mm. They are welded together at their intersections (by known techniques) and are coated with plastics material of a thickness no greater than a few tenths of a mm.

A mesh of the type specified above is normally obtainable commercially, for example, for fencing.

The mesh constituting the layer 4 having plastic memory is inserted between and glued to the two layers 1 and 2 of foamed material with the use of conventional glues: in other words, the inclusion of the mesh 4 does not involve any change in the method of connecting the two layers 1 and 2 between which the mesh 4 is sandwiched.

Although it is much cheaper than the foamed plastics materials tested in the past (for example, "Etafoam"), the wire mesh 4 retains all the advantages of the solutions already proposed in relation to the use of such plastics materials, that is to say:
- the distribution of the weight of the occupant of the seat over a very wide area,
- the fact that it prevents the squab from being fully compressed vertically (so-called "bumping") under impulsive compression forces such as those which arise due to the weight of the person occupying the seat when the vehicle is jolted, and
- the fact that it can be sandwiched between layers of foamed material (1 and 2) without any change in the method of assembly of the squab.

Moreover, tests carried out by the Applicant have shown that, besides its general plasticity (in the terms defined in the prior European application No. EP-A-O 363 330), the use of the wire mesh 4 provides a degree of resilience which is greater than that shown by the plastics materials used in the past and which opens up the possibility of a further reduction in the overall thickness of the squab C.

In addition to these advantages, the use of the wire mesh insert 4 has the advantage that it provides an intermediate layer which, by virtue of its reticular structure, has a very large number of points at which the padding (upholstery) can be attached to the frame or framework of the seat. The squab can therefore be designed very freely from a stylistic point of view; in particular, the lateral restraining ribs (so-called "bolsters") used in seats produced at present can be omitted.

Tests carried out by the Applicant up to now (500,000 fatigue test cycles) show that, particularly as regards fatigue, the solution according to the invention has excellent properties, certainly better than those of seats formerly produced with plastics inserts.

A further positive point which should be mentioned is the fact that the wire mesh insert 4 enables the padding to be preformed before the seat is upholstered with the use of a manikin with a mass much greater than that of an average human being (for example 150 kg) so as to form the mesh 4 to a predetermined concavity.

In exactly the same way, one could consider shaping the mesh 4 right at the start to give it the desired concavity before it is inserted in the seat structure.

The thoroughly practical nature of the connection between the wire mesh 4 and the system to be formed can be seen during the manufacture of the squab C.

In fact, the foamed material constituting the layers 1 and 2 is distributed absolutely evenly across the mesh 4, both above and below it, without leaving any spaces.

In some cases, however, it may be found that the positioning of the wire mesh 4 in the forming dies may create some difficulty, such as, for example, a risk of incorrect alignment, or the stoppage or slowing of the production line.

In order to avoid these problems, however, it suffices to fix the wire mesh 4 to the peripheral frame T of metal rod which is incorporated in the foamed material of the seats, particularly the rear seats.

Clearly, the use of the mesh 4 may be accompanied by different designs for the foamed material (the layers 1 and 2) and variations in the density thereof so that increased comfort and considerable economies can be foreseen due to a reduction in the quantity of foam to be used.

## Claims

1. A layered support structure for seats, including at least one layer (4) having plastic memory, sandwiched between two layers (1, 2) made of foamed material of the structure, characterised in that the at least one layer is constituted by a mesh (4).

2. A structure according to Claim 1, characterised in that the mesh (4) is a metal wire mesh.

3. A structure according to Claim 2, characterised in that the wire mesh (4) is made of steel.

4. A structure according to any one of Claims 1 to 3, characterised in that the mesh (4) has surface protection.

5. A structure according to Claim 4, characterised in that the surface protection is constituted by a plastics coating or galvanising of the mesh (4).

6. A structure according to any one of Claims 1 to 5, characterised in that the mesh (4) has a mesh size of the order of 10 x 10 mm.

7. A structure according to any one of Claims 1 to 6, characterised in that the mesh (4) is made from wires with diameters of the order of 1 mm.

8. A structure according to any one of the preceding claims, characterised in that the wires constituting the mesh (4) are welded together at their intersections.

9. A structure according to Claim 1, characterised in that the wire mesh (4) is glued to at least one adjacent layer (1, 2) of the structure.

10. A seat according to Claim 1, characterised in that the wire mesh (4) has a general concavity in its rest position.

11. A method for the manufacture of a structure according to Claim 10, characterised in that it comprises, in order, the steps of:
- assembling the layered structure (1 to 4), and
- shaping the structure to give it a general concavity, so that the concavity is retained by plastic memory by the wire mesh (4).

12. A method for the manufacture of a structure according to Claim 10, characterised in that it comprises, in order, the operations of:
- shaping the wire mesh (4) to give it the general concavity, and
- assembling the layers of the structure (1 to 4).

13. A method for the manufacture of a structure according to any one of Claims 1 to 10, which has a peripheral frame, characterised in that it includes the step of fixing the periphery of the mesh (4) to the frame (T).

## Patentansprüche

1. Schichtförmiger Stützaufbau für Sitze mit mindestens einer, eine plastische Merkfähigkeit aufweisenden Schicht (4), die zwischen zwei Schichten (1, 2) aus geschäumten Material des Aufbaus eingelegt ist, **dadurch gekennzeichnet**, daß mindestens eine Schicht durch ein Gitter (4) gebildet ist.

2. Aufbau nach Anspruch 1, **dadurch gekennzeichnet**, daß das Gitter (4) ein Metalldrahtgitter ist.

3. Aufbau nach Anspruch 2, **dadurch gekennzeichnet**, daß das Drahtgitter (4) aus Stahl gemacht ist.

4. Aufbau nach einem der Ansprüche 1 bis 3, **dadurch gekennzeichnet**, daß das Gitter (4) einen Oberflächenschutz hat.

5. Aufbau nach Anspruch 4, **dadurch gekennzeichnet**, daß der Oberflächenschutz von einer Kunststoffbeschichtung oder durch Galvanisierung des Gitters (4) gebildet ist.

6. Aufbau nach einem der Ansprüche 1 bis 5, **dadurch gekennzeichnet**, daß das Gitter (4) eine Maschenweite in der Größenordnung von 10 x 10 mm hat.

7. Aufbau nach einem der Ansprüche 1 bis 6, **dadurch gekennzeichnet**, daß das Gitter (4) aus Drähten mit einem Durchmesser in der Größenordnung von 1 mm hergestellt ist.

8. Aufbau nach jedem der Vorigen Ansprüche, **dadurch gekennzeichnet**, daß die das Gitter (4) bildenden Drähte an ihren Überschneidungen zusammengeschweißt sind.

9. Aufbau nach Anspruch 1, **dadurch gekennzeichnet**, daß das Drahtgitter (4) an mindestens eine angrenzende Schicht (1, 2) des Aufbaus angeklebt ist.

10. Sitz nach Anspruch 1, **dadurch gekennzeichnet**, daß das Drahtgitter (4) eine allgemeine Konkavität in seiner Ruheposition aufweist.

11. Verfahren zur Herstellung eines Aufbaus nach Anspruch 10, **dadurch gekennzeichnet**, daß es der Reihenfolge nach folgende Schritte umfaßt:
- Zusammensetzen des schichtförmigen Aufbaus (1 bis 4) und
- Formen des Aufbaus, um ihm eine allgemeine Konkavität zu geben, so daß die Konkavität durch plastische Merkfähigkeit des Drahtgitters (4) beibehalten wird.

12. Verfahren zur Herstellung eines Aufbaus nach Anspruch 10, **dadurch gekennzeichnet**, daß es der Reihenfolge nach folgende Arbeitsvorgänge umfaßt:
- Formen des Drahtgitters (4), um ihm eine allgemeine Konkavität zu geben und
- Zusammensetzen der Schichten des Aufbaus (1 bis 4).

13. Verfahren zur Herstellung eines Aufbaus nach einem der Ansprüche 1 bis 10, der einen Umfangsrahmen hat, **dadurch gekennzeichnet**, daß es den Schritt der Befestigung des Umfangs des Gitters (4) am Rahmen (T) einschließt.

## Revendications

1. Structure de support stratifiée pour siège comprenant au moins une couche (4) ayant une mémoire plastique interposée entre deux couches (1, 2) de la structure qui sont faites d'une matière en mousse, caractérisée en ce qu'au moins une couche est constituée par un élément réticulaire (4).

2. Structure selon la revendication 1, caractérisée en ce que l'élément réticulaire (4) est un grillage de fil métallique.

3. Structure selon la revendication 2, caractérisée en ce que le grillage en fil (4) est fait d'acier.

4. Structure selon une quelconque des revendications 1 à 3, caractérisée en ce que l'élément réticulaire (4) possède une protection superficielle.

5. Structure selon la revendication 4, caractérisée en ce que la protection superficielle est constituée par un revêtement de matière plastique ou par une galvanisation de l'élément réticulaire (4).

6. Structure selon une quelconque des revendications 1 à 5, caractérisée en ce que l'élément réticulaire (4) possède une dimension de mailles de l'ordre de 10 x 10 mm.

7. Structure selon une quelconque des revendications 1 à 6, caractérisée en ce que l'élément réticulaire (4) est fait de fils d'un diamètre de l'ordre de 1 mm.

8. Structure selon une quelconque des revendications précédentes, caractérisée en ce que les fils constituant l'élément réticulaire (4) sont soudés les uns aux autres aux intersections.

9. Structure selon la revendication 1, caractérisée en ce que l'élément réticulaire en fil (4) est collé à au moins une couche adjacente (1, 2) de la structure.

10. Siège selon la revendication 1, caractérisée en ce que l'élément réticulaire (4) a une concavité générale dans sa position de repos.

11. Procédé de fabrication d'une structure selon la revendication 10, caractérisé en ce qu'il comprend, dans l'ordre, les phases consistant à :
- assembler la structure stratifiée (1 à 4), est
- former la structure pour lui donner une concavité générale de manière que la concavité soit conservée par l'élément réticulaire en fil (4) par un effet de mémoire plastique.

12. Procédé de fabrication d'une structure selon la revendication 10, caractérisé en ce qu'il comprend, dans l'ordre, les opérations consistant à :
- former l'élément réticulaire en fil (4) pour lui donner la concavité générale, est
- assembler les couches de la structure (1 à 4).

13. Procédé de fabrication d'une structure selon une quelconque des revendications 1 à 10, qui possède un cadre périphérique, caractérisé en ce qu'il comprend la phase consistant à fixer la périphérie de l'élément réticulaire (4) au cadre (T).
